# EUROPÄISCHE PATENTSCHRIFT

(11) **EP 0 945 967 B1**
(45) Veröffentlichungstag und Bekanntmachung des Hinweises auf die Patenterteilung: **11.10.2006**
(21) Anmeldenummer: 99101173.5
(22) Anmeldetag: 22.01.1999
(51) Int. Cl.: H02K 29/08, H02P 6/14

(54) **Elektronisch kommutierter Motor**
Electronically commutated motor
Moteur à commutation électronique

(30) Priorität: 21.03.1998 DE 29805175 U
(43) Veröffentlichungstag der Anmeldung: 29.09.1999
(73) Patentinhaber: ebm-papst St. Georgen GmbH & Co. KG, 78112 St. Georgen (DE)
(72) Erfinder: Furtwängler, Patrick, 77709 Kirnbach (DE); Rappenecker, Hermann, Dipl.-Ing., 78147 Vöhrenbach (DE); Reich, Harald, Dipl.-Ing., 78112 St. Georgen (DE); Szondi, Gabor, Dipl.-Ing., 78126 Königsfeld (DE)
(74) Vertreter: Raible, Hans

(56) Entgegenhaltungen:
- EP-A- 0 386 371
- DE-A- 2 245 557
- DE-A- 3 513 167
- DE-A- 3 633 241
- DE-A- 4 331 862
- DE-A- 19 608 424

## Beschreibung

Die Erfindung betrifft einen elektronisch kommutierten Motor mit einem permanentmagnetischen Rotor und einem Stator.

Aus der DE-C2-2 835 210 ist es bekannt, dass Statorstreuflüsse einen negativen Einfluss auf die Kommutierung eines elektronisch kommutierten Motors haben können, weil sie einen störenden Einfluss auf den Hallsensor ausüben.

Aus der DE-A1-3 633 241 kennt man einen dreisträngigen elektronisch kommutierten Außenläufermotor, bei dem; zur Steuerung der Ströme in diesen drei Strängen, drei Hallsensoren vorgesehen sind. Diese werden vom Nutzfluss des - radial magnetisierten - Dauermagneten des Motors gesteuert, welcher die Form eines Magnetrings hat. Zur Verstärkung dieses Nutzflusses ist jeder Hallsensor auf zugeordneten Flussleitstücken angeordnet, durch welche das Signal des betreffenden Hallsensors vergrößert wird. Jedoch führt eine solche Anordnung automatisch zu einer Vergrößerung von Länge und ggf. auch Durchmesser des Motors, da man für diese Flussleitstücke - die auch eine gewisse Abschirmung gegen Streuflüsse der Statorwicklung bilden - Platz im Motor benötigt.

Die EP-A2-0 386 371 betrifft einen Festplattenspeicher, dessen Festplatten von einem dreisträngigen elektronisch kommutierten Außenläufermotor angetrieben werden. Zur Steuerung der Ströme in den drei Strängen sind drei Hallsensoren vorgesehen, die von einem speziellen Steuermagnetring gesteuert werden, der an einer Stirnseite des Außenrotors befestigt ist. Zur Verstärkung ihrer Ausgangssignale sind diese Hallsensoren auf einem ferromagnetischen Rückschlussring angeordnet, wodurch auch der Streufluss des Steuermagnetrings reduziert werden soll, der sonst die Daten beeinträchtigen könnte, welche auf den Festplatten gespeichert sind. Wegen des separaten Steuermagnetrings ist eine solche Anordnung sehr aufwändig.

Aus der DE-A1-1 960 84 24 kennt man einen zweisträngigen elektronisch kommutierten Außenläufermotor mit einem Außenrotor, der zu seiner Lagerung eine Welle hat. Der Außenrotor hat ein becherförmiges Trägerteil, in dem ein radial magnetisierter Dauermagnet angeordnet ist. Ferner hat dieser Motor einen Innenstator mit einem Blechpaket, das auf einem Lagerrohr angeordnet ist und in dessen Nuten Wicklungselemente angeordnet sind, die über Wickelköpfe an beiden Enden des Blechpakets elektrisch miteinander verbunden sind.

Bei diesem Motor ist die Welle im Lagerrohr gelagert. Auch hat der Motor einen Hallsensor, der auf einer Leiterplatte angeordnet ist. Dieser Sensor ist in einem Streuflussbereich des Rotormagneten und auch in einem Streuflussbereich des Innenstators angeordnet und dient dazu, den Strom in den Wicklungselementen des Innenstators zu steuern. Ein solcher Motor hat eine sehr einfache, kompakte Bauweise, hat freilich den Nachteil, dass die Ausgangssignale des Hallsensors durch Streuflüsse des Innenstatorsbeeinträchtigt werden können.

Es ist deshalb eine Aufgabe der Erfindung, einen neuen elektronisch kommutierten Außenläufermotor bereit zu stellen.

Nach der Erfindung wird diese Aufgabe gelöst durch einen elektronisch kommutierten Außenläufermotor mit den Merkmalen des Patentanspruchs 1. Ein solcher Motor hat einen sehr kompakten Aufbau, da der Sensor durch das Streufeld des Rotormagneten gesteuert werden kann, und durch den Flusskonzentrator, der auf dem Lagerrohr angeordnet ist, vermeidet man eine Beeinträchtigung des Sensorsignals durch Streuflüsse vom Innenstator, so dass der Sensor trotz unverändert kompaktem Aufbau des Motors ein wesentlich besseres Signal liefert und eine exaktere Kommutierung erfolgt, besonders auch beim Beschleunigen und Bremsen des Motors.

Weitere Einzelheiten und vorteilhafte Weiterbildungen der Erfindung ergeben sich aus dem im folgenden beschriebenen und in der Zeichnung dargestellten, in keiner Weise als Einschränkung der Erfindung zu verstehenden Ausführungsbeispiel, sowie aus den Unteransprüchen. Es zeigt:
- Fig. 1: eine schematische Darstellung eines elektronisch kommutierten Außenläufermotors mit Saugblech, im Längsschnitt,
- Fig. 2: eine vergrößerte Detaildarstellung des Saugblechs nach Fig. 1, dort bezeichnet mit II,
- Fig. 3: eine Draufsicht auf eine Nut mit angedeutetem galvanomagnetischem Rotorstellungssensor,
- Fig. 4: eine Prinzipdarstellung des Verlaufs der Magnetflüsse eines Motors nach Fig. 1, jedoch ohne Saugblech,
- Fig. 5: eine Prinzipdarstellung des Verlaufs der Magnetflüsse eines Motors nach Fig. 1,
- Fig. 6a und 6b: Messungen mit einem analogen galvanomagnetischen Rotorstellungssensor in einem Motor nach Fig. 1, ohne bzw. mit Saugblech,
- Fig. 7: ein Blockschaltbild eines dreiphasigen kollektorlosen Gleichstrommotors, bei welchem die vorliegende Erfindung bevorzugt Anwendung findet,
- Fig. 8: ein Schaltbild einer Anordnung zur Erfassung der Rotorstellung und zur drehzahlabhängigen Veränderung der Phasenlage der erfaßten Rotorstellungssignale,
- Fig. 9: eine Tabelle, die die logische Verknüpfung nach Fig. 7 zeigt,
- Fig. 10: eine Vollbrückenschaltung, wie sie in Fig. 7 verwendet wird,
- Fig. 11: Darstellungen von zeitlichen Verläufen zur Erläuterung des beispielhaften Motors nach Fig. 7,
- Fig. 12: eine Draufsicht auf ein Saugblech bei einem Motor mit drei galvanomagnetischen Rotorstellungssensoren,
- Fig. 13: eine Prinzipdarstellung des Verlaufs der Magnetflüsse eines Motors nach Fig. 1, mit einem Lagertragrohr und einem Flansch aus nicht-ferromagnetischem Material.

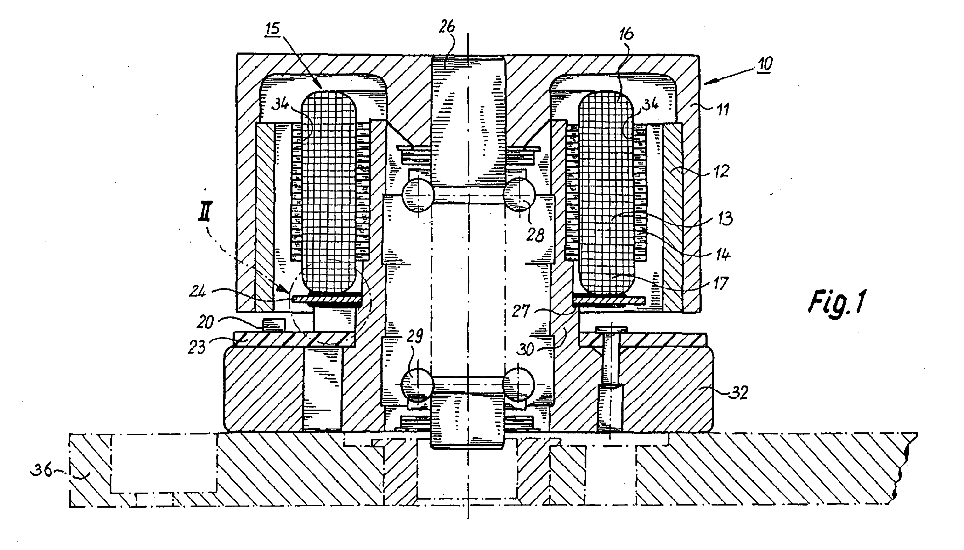

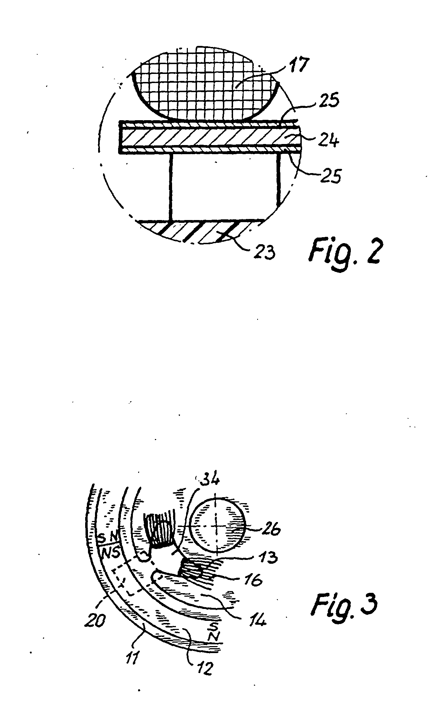

Fig. 1, Fig. 2 und Fig. 3 zeigen einen elektronisch kommutierten Außenläufermotor.

Ein Außenrotor 10, bei dem in einem becherförmigen Trägerteil 11 aus ferromagnetischem Material ein radial magnetisierter Dauermagnet 12 angeordnet ist, ist auf eine Rotorachse 26 aufgepreßt, die über Kugellager 28 und 29 axial und radial in einem Lagertragrohr 30 gelagert ist.
Über einen Flansch 32 des Lagertragrohrs ist das Lagertragrohr 30 mit einer Basisplatte 36 verbunden.

Ein Innenstator 15 weist ein Blechpaket 14 auf, das auf dem Lagertragrohr 30 sitzt, und in dessen Nuten 34 Wicklungselemente 13 angeordnet sind, die über Wickelköpfe 16 und 17 an beiden Enden des Blechpakets 14 elektrisch miteinander verbunden sind. Diese Wickelköpfe erzeugen im Betrieb einen magnetischen Streufluß, der umso größer ist, je höher der Strom ist, der durch die Wicklungselemente 13 fließt.

Eine Leiterplatine 23 ist auf dem Flansch 32 des Lagertragrohrs 30 unterhalb der offenen Seite des becherförmigen Trägerteils 11 des Rotors 10 angebracht. Auf der Leiterplatine 23 ist etwa gegenüberliegend der unteren Stirnseite des Rotormagneten 12, und auch im Streuflußbereich des Innenstators 15, mindestens ein galvanomagnetischer Rotorstellungssensor 20 angebracht.

Bei den vom Boden des becherförmigen Trägerteils 11 abgewandten Wickelköpfen 17 des Stators 15 ist ein Saugblech 24 aus ferromagnetischem Werkstoff angebracht, z.B. aus Transformatorenblech. Es kann auch als Flußkonzentrator bezeichnet werden. Das Saugblech 24 kann auf viele Arten ausgeführt werden, denen gemeinsam ist, daß sie sich zumindest in dem Bereich des Innenstators 15 befinden, in welchem sich der mindestens eine Rotorstellungssensor 20 befindet. Das Saugblech 24 hat eine maximale radiale Erstreckung, die durch den durch den Rotormagneten 12 gegebenen Innenradius des Rotors 10 gegeben ist, jedoch üblicherweise kleiner ist. Die letztendliche Bestimmung der radialen Erstreckung am Ort des galvanomagnetischen Rotorstellungssensors 20 ist nur durch Experimente möglich. Das Saugblech 24 wird in diesem Beispiel von einer beidseitig aufgetragenen Isolierschicht 25 umgeben.

Das Saugblech 24 hat zweckmäßig die Umrißform einer Ringscheibe, da es dann im Zusammenwirken mit dem Rotormagneten 12 kein störendes Drehmoment erzeugt. Es ist mit seinem Innenumfang im Bereich einer Ringschulter 27 des Lagertragrohrs 30 befestigt, welches bevorzugt aus einem magnetisch leitenden Werkstoff hergestellt ist. Das Saugblech 24 kann zusätzlich mit den Wickelköpfen 17 verklebt werden, um eine Bewegung des Saugblechs 24 relativ zu den Wickelköpfen 17 zu vermeiden. Hierzu ist ein Verkleben, z.B. mittels einer Pulverbeschichtung, möglich. Der Außendurchmesser des Saugblechs 24 entspricht bei diesem Beispiel etwa dem Außendurchmesser des Blechpakets 14.

Fig. 12 zeigt eine Aufsicht auf ein Saugblech 24 bei einem Motor mit drei galvanomagnetischen Rotorstellungssensoren 20, 21 und 22. Der Rotor 10 und seine Welle 26 sind schematisch dargestellt. Das Saugblech 24, das hier auf dem Lagertragrohr 30 sitzt, ist hier mit radialen Schlitzen 33 versehen, die ein Auftreten von großen Wirbelströmen verhindern. Die galvanomagnetischen Rotorstellungssensoren 20, 21 und 22 befinden sich jeweils bevorzugt in einem Winkelbereich zwischen zwei Schlitzen 33.

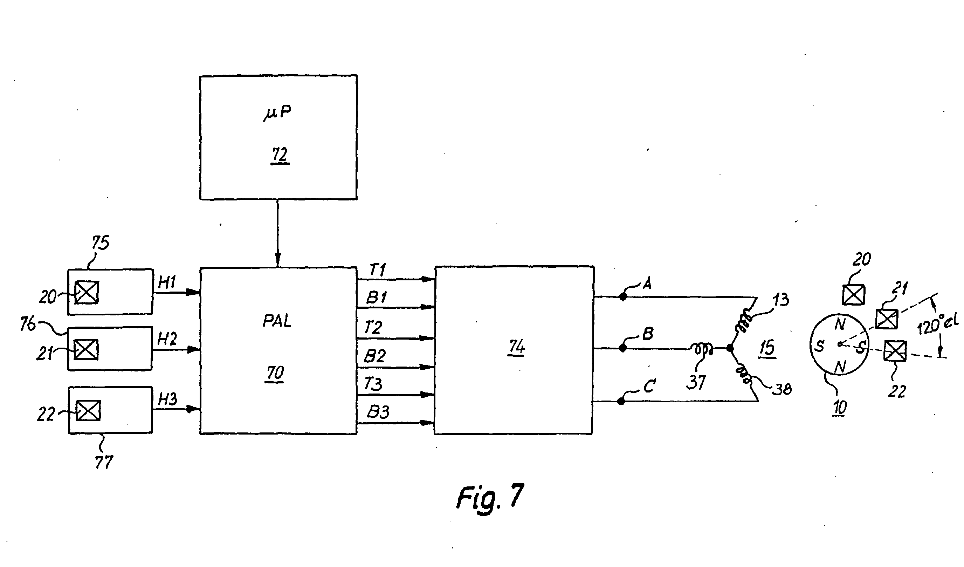

Fig. 7 zeigt eine Übersichtsdarstellung am Beispiel eines dreisträngigen (= dreiphasigen) elektronisch kommutierten Motors. Dieser hat an seinem Stator 15 eine (hier beispielhaft im Stern geschaltete) Statorwicklung mit drei Strängen (Phasen) 13, 37 und 38, deren Anschlüsse mit A, B und C bezeichnet sind. Ferner hat der Motor einen (nur schematisch angedeuteten) permanentmagnetischen Rotor 10, der vierpolig dargestellt ist. In seinem magnetischen Streuflußbereich sind drei galvanomagnetische Rotorstellungssensoren 20, 21 und 22 mit Abständen von 120° el. am Stator 15 angeordnet. Fig. 1 zeigt nur einen dieser drei Sensoren, nämlich den Sensor 20.

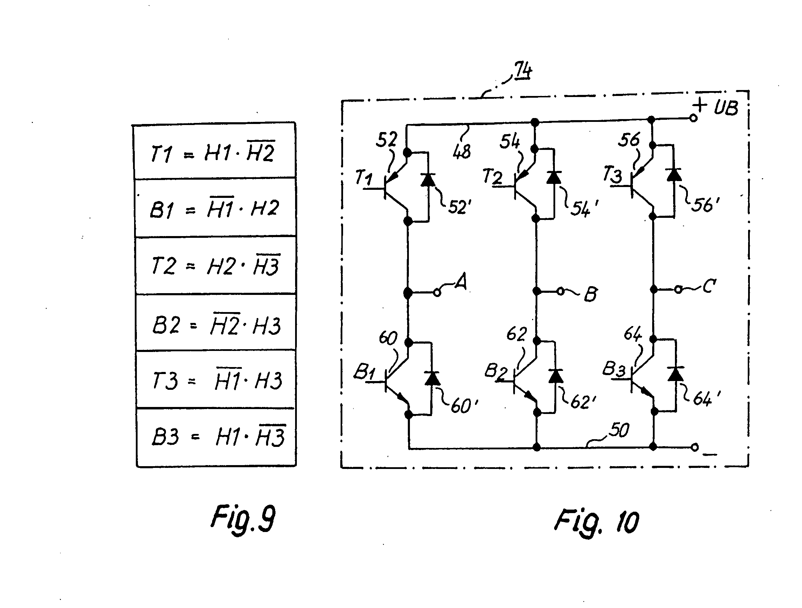

Zur Ansteuerung der Statorwicklungen 13, 37 und 38 dient hier beispielhaft eine Vollbrückenschaltung 74, deren Aufbau in Fig. 10 dargestellt ist. Sie hat drei "obere" Transistoren 52, 54 und 56 in Form von pnp-Transistoren, deren Emitter jeweils mit einer Plusleitung 48 und deren Kollektoren mit den Anschlüssen A bzw. B bzw. C verbunden sind. Sie hat ferner drei "untere" Brückentransistoren 60, 62 und 64 in Form von npn-Transistoren, deren Emitter mit einer Minusleitung 50 und deren Kollektoren mit den Anschlüssen A bzw. B bzw. C verbunden sind. Zu den Transistoren sind jeweils Freilaufdioden parallelgeschaltet.

Zur Ansteuerung der oberen Transistoren 52, 54 und 56 dienen, wie dargestellt, die Signale T1, T2 und T3, und zum Ansteuern der unteren Transistoren die Signale B1, B2, B3. Diese Signale werden aus den Signalen H1, H2, H3 abgeleitet, welche Signale ihrerseits von den galvanomagnetischen Rotorstellungssensoren 20, 21 und 22 hergeleitet sind. Wie dies geschieht, wird nachfolgend beschrieben. Die logischen Gleichungen sind in Fig. 9 dargestellt. Z.B. wird der Transistor 52 durch das Signal T1 eingeschaltet, wenn das Signal H1 hoch und das Signal H2 niedrig ist. Analoges gilt für die übrigen Transistoren und kann den dargestellten logischen Gleichungen entnommen werden.

Die Signale T1 bis B3 werden in einer programmierbaren Logikschaltung (PAL) 70 aus den Signalen H1, H2 und H3 erzeugt. Hierzu ist die PAL 70 entsprechend programmiert. Ferner ist in Fig. 7 ein Mikroprozessor 72 vorgesehen, der z.B. die Funktion hat, die Drehrichtung des Motors zu steuern.

Weiterhin sind in Fig. 7 die Schaltungen 75, 76 und 77 der galvanomagnetischen Rotorstellungssensoren 20, 21 und 22 schematisch dargestellt.

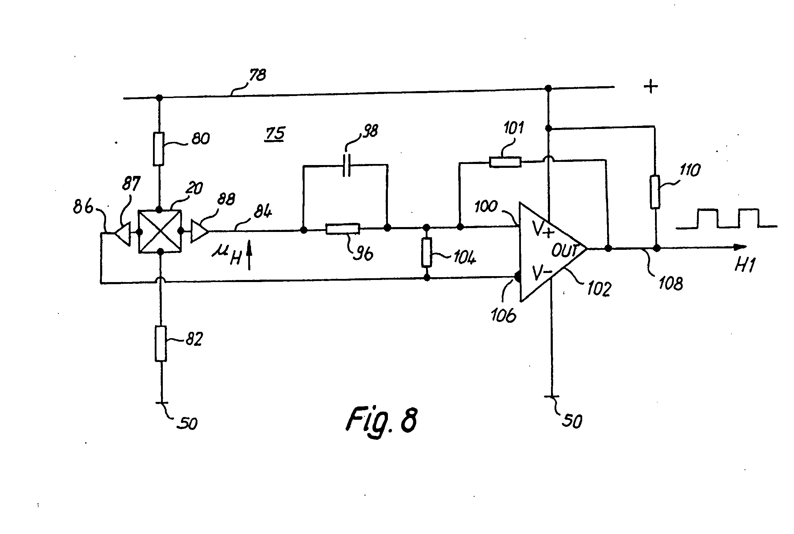

Fig. 8 zeigt beispielhaft die Schaltung 75 für das Signal H1. Die Schaltungen 76 und 77 haben jeweils einen identischen Aufbau.

Bei dem verwendeten Rotorstellungssensor 20 handelt es sich bevorzugt um einen Hallgeneratoren, bei dem an den Ausgängen 84 und 86 ein verstärktes Hallsignal liegt, z.B. um den Hallgeneratortyp HW101C.

Zwischen dem galvanomagnetischen Rotorstellungssensor 20 und der Plusleitung 78 liegt ein Widerstand 80, und zwischen dem galvanomagnetischen Rotorstellungssensor 20 und der Minusleitung 50 liegt ein Widerstand 82. Die Widerstände 80 und 82 bestimmen den maximalen Strom durch den galvanomagnetischen Rotorstellungssensor, und der Widerstand 80 bewirkt eine Potentialverschiebung, da der Komparator 102 nicht mit einer Eingangsspannung arbeiten kann, die den gleichen Wert hat wie seine positive Betriebsspannung an der Leitung 78.

Die Signale des galvanomagnetischen Rotorstellungssensors 20 werden von zwei analogen Vorverstärkern 87 und 88 verstärkt. Der Ausgang 84 des analogen Vorverstärkers 88 ist über die Parallelschaltung eines Widerstands 96 und eines Kondensators 98 mit dem nicht invertierenden Eingang 100 eines Komparators 102 verbunden. Dieser Eingang 100 ist über einen hochohmigen Widerstand 101 mit dem Ausgang 108 und über einen Widerstand 104 mit dem invertierenden Eingang 106 verbunden, und letzterer ist seinerseits an den Ausgang 86 des analogen Vorverstärkers 87 angeschlossen.

Am Ausgang 108 des Komparators 102 erhält man im Betrieb das rechteckförmige Signal H1, das gemäß Fig. 7 zur Steuerung des Motors dient. Der Ausgang 108 ist über einen Widerstand 110 mit der Plusleitung 78 verbunden.

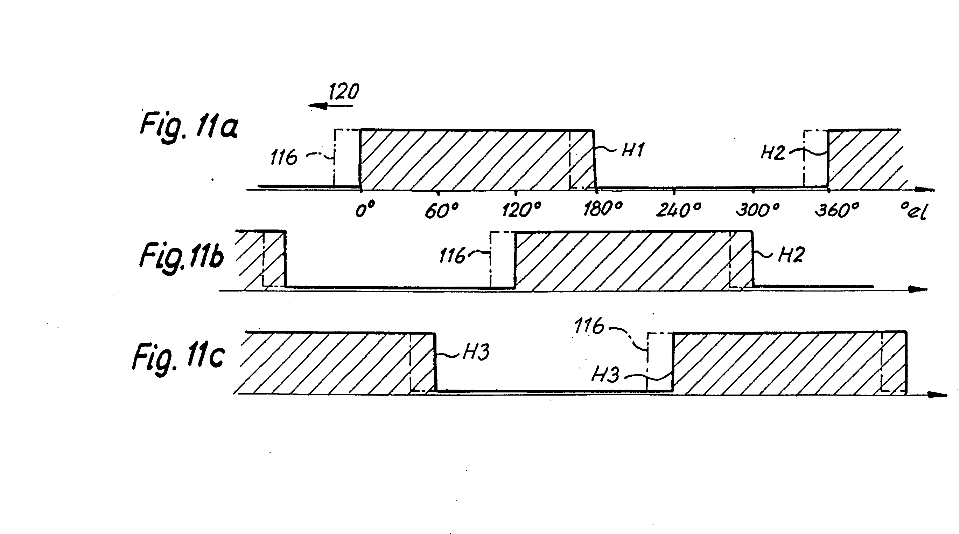

Der hochohmige Widerstand 101 gibt, sofern er verwendet wird, der Anordnung ein Hystereseverhalten. Die Parallelschaltung von Widerstand 96 und Kondensator 98 vor dem Komparatoreingang 100 bewirkt eine elektronische Zündwinkelverschiebung 120, wie sie in Fig. 11 für die Ausgänge H1, H2 und H3 dargestellt ist. Unter dem "Zündwinkel" versteht man den Beginn der Kommutierung. Bei höheren Drehzahlen wird also die Kommutierung durch die phasenverschobenen Signale 116 bewirkt, die am Ausgang des Komparators der jeweiligen Schaltung 75, 76 oder 77 (Fig. 7) zur Verfügung stehen.

Es braucht nicht betont zu werden, daß die Erfindung nicht auf dreiphasige Motoren beschränkt ist, sondern sich für alle Motoren eignet, bei denen mindestens ein Rotorstellungssensor verwendet wird.

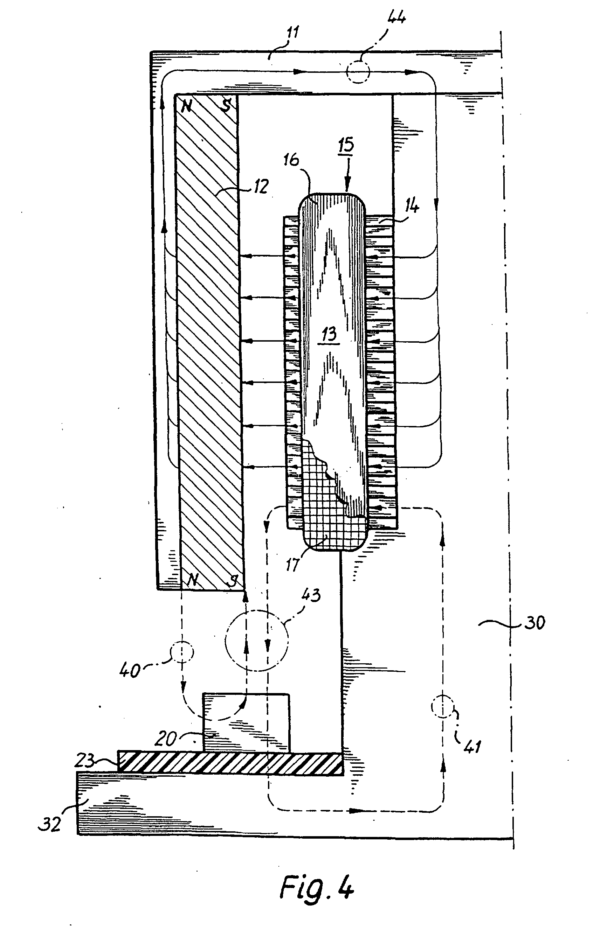

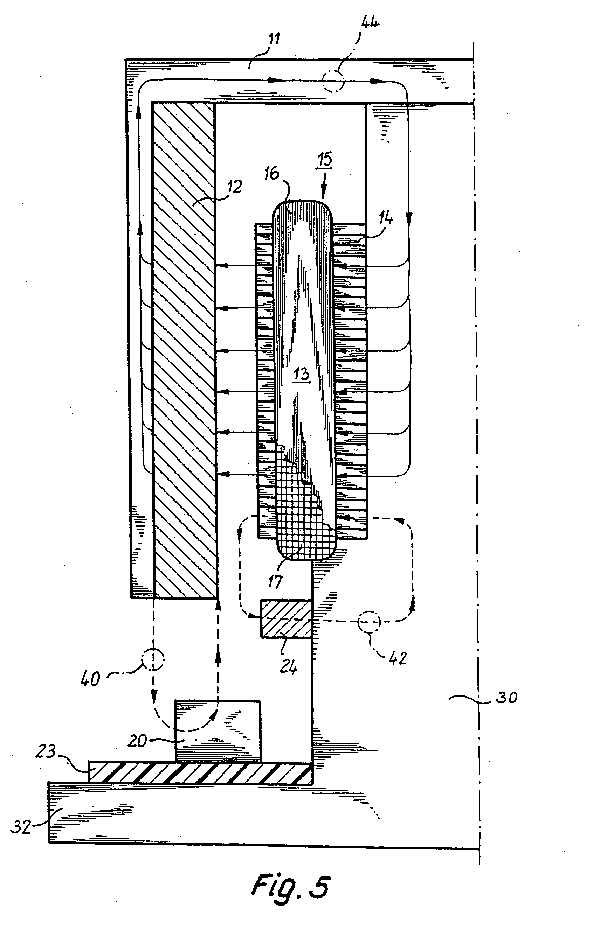

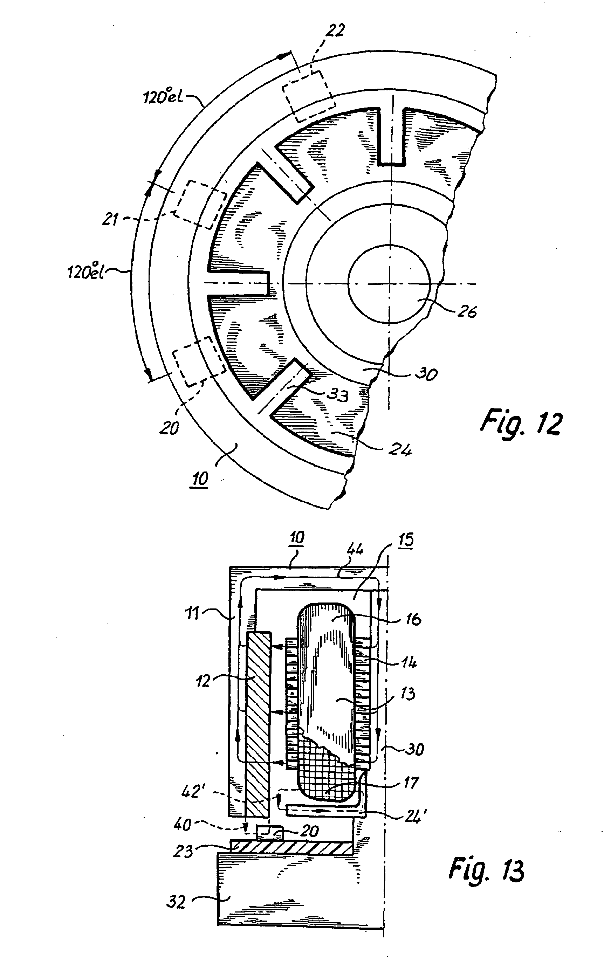

Fig. 4 zeigt eine Prinzipdarstellung der magnetischen Flüsse in einem Motor nach Fig. 1, jedoch ohne Saugblech, Fig. 5 zeigt die magnetischen Flüsse mit Saugblech 24. Fig. 13 zeigt eine bevorzugte Variante zu Fig. 5, bei der das Lagertragrohr 30 und der Flansch 32 aus einem nicht-ferromagnetischem Material sind, z.B. aus Aluminium oder aus Kunststoff.

Der Dauermagnet 12, der in dem becherförmigen Trägerteil 11 angeordnet ist, erzeugt entsprechend der von der Rotorstellung abhängigen Magnetisierung am Ort des galvanomagnetischen Rotorstellungssensors 20, der auf der Leiterplatine 23 sitzt, einen magnetisches Steuerfluß 40, anhand dessen die Wicklungsphase 13 so bestromt wird, daß sich der Motor aufgrund des Hauptflusses 44 in die gewünschte Richtung dreht. Wechselt der magnetische Steuerfluß 40 am Ort des galvanomagnetischen Rotorstellungssensors 20, so erfolgt eine Kommutierung der Wicklungsphase 13, und die Flüsse ändern dementsprechend ihre Richtung.

Bevorzugt wird ein Lagertragrohr 30 und ein Flansch 32 aus ferromagnetischem Material. Es werden jedoch auch Motoren gefertigt, bei denen das Lagertragrohr 30 und der Flansch 32 aus nicht-ferromagnetischem Material wie z.B. Aluminium oder Kunststoff besteht.

Ohne Saugblech und mit einem Lagertragrohr 30 und einem Flansch 32 aus ferromagnetischem Material verläuft, wie in Fig. 4 dargestellt, der von dem Wickelkopf 17 ausgehende magnetische Streufluß 41 über den galvanomagnetischen Rotorstellungssensor 20 zu dem Flansch 32 des Lagertragrohrs und von dort über das Lagertragrohr 30 zurück zum Statorblechpaket 14.

Dieser Streufluß 41 wirkt dem Fluß 40 des Rotormagneten 12 im Bereich 43 des Sensors 20 entgegen, und reduziert deshalb das Ausgangssignal des galvanomagnetischen Rotorstellungssensors 20 umso stärker, je größer der Strom im Stator 15 wird.

Bei einem Lagertragrohr 30 und einem Flansch 32 aus nicht-ferromagnetischem Material haben der Flansch 32 und das Lagertragrohr 30 magnetisch dieselbe Leitfähigkeit wie Luft. Bei kompakt gebauten, leistungsstarken Motoren kommt es jedoch ebenfalls zu einer Beeinflussung des galvanomagnetischen Rotorstellungssensors 20 durch den Streufluß des Stators 15.

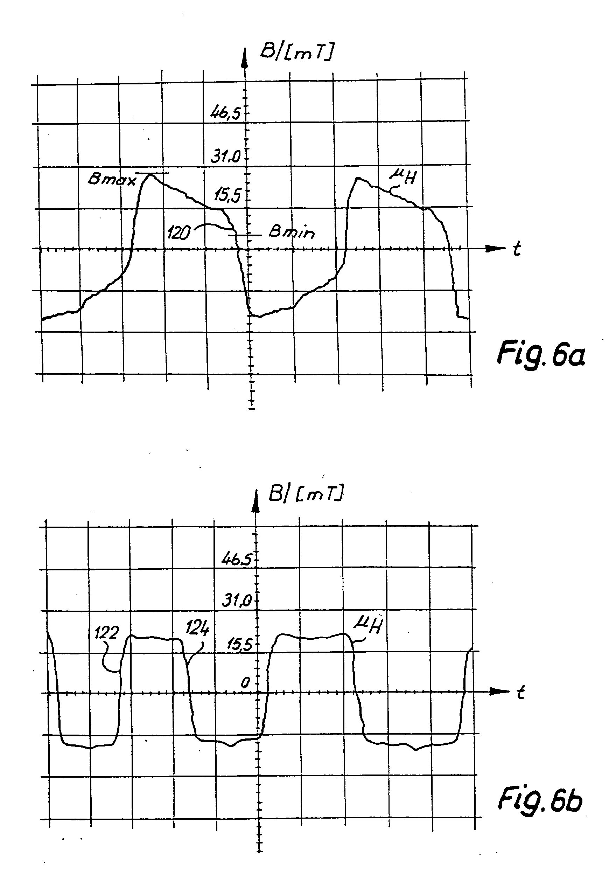

In Fig. 6a ist eine entsprechende Messung an einem Motor mit Lagertragrohr und Flansch aus Stahl mit einem analogen galvanomagnetischen Rotorstellungssensor (Hallgenerator) dargestellt. Der galvanomagnetische Rotorstellungssensor 20 erkennt hier nur einen verschliffenen, unsymmetrischen magnetischen Fluß. Es kommt im Übergangsbereich 120 zu undefinierten Schaltpunkten. Dies führt zu einem schnellen abwechselnden An- und Ausschalten der Transistoren 52 bis 64 in der Brückenschaltung 74 und damit zu einer hohen thermischen Belastung, besonders beim Beschleunigen und Bremsen. Die Wicklungsphasen 13, 37 und 38 werden im Kommutierungsbereich falsch bestromt, was eine erhebliche Verschlechterung des Wirkungsgrades des Motors, besonders bei der Beschleunigung und Abbremsung, bewirkt. Weiterhin kann bei einer Brückenschaltung, wie sie in Fig. 10 dargestellt ist, durch den undefinierten Schaltpunkt z.B. ein gleichzeitiges Einschalten der Transistoren 52 und 60 der Brücke 74 erfolgen, was einen Kurzschluß zur Folge hat. Dieser führt zu einer Zerstörung der Brücke.

Mit Saugblech 24 und mit einem Lagertragrohr 30 und einem Flansch 32 aus ferromagnetischem Material, wie in Fig. 5 dargestellt, verläuft der von dem Wickelkopf 17 ausgehende magnetische Streufluß 42 über das magnetisch gut leitende Saugblech 24 und von dort über das Lagertragrohr 30 zurück zum Statorblechpaket 14. Man kann sagen, daß dieser Streufluß 42 vom Saugblech 24 angesaugt wird. Der galvanomagnetische Rotorstellungssensor 20 wird so kaum noch vom Streufluß des Stators 15 beeinflußt, wie sich das aus einem Vergleich von Fig. 6b (mit Saugblech 24) mit Fig. 6a (ohne Saugblech) klar ergibt, d.h. in Fig. 6b hat das Signal uH zwischen den Ausgängen 84 und 86 des Sensors 20 exakt definierten Flanken 122 und 124.

Fig. 13 zeigt den Verlauf der Flüsse für einen Motor mit Saugblech 24 und mit einem Lagertragrohr 30 und einem Flansch 32 aus nicht-ferromagnetischem Material.

Der von dem Wickelkopf 17 ausgehende magnetische Streufluß 42' verläuft über das magnetisch gut leitende Saugblech 24' zurück zum Statorblechpaket 14. Das Saugblech 24' ist hier bevorzugt so an dem magnetisch nicht leitenden Lagertragrohr 30 zum Statorblechpaket 14 hin verlängert, daß der magnetische Streufluß 42 ohne Unterbrechung zu dem Statorblechpaket 14 zurückgeleitet wird.

Auf diese Weise erhält man bei allen Betriebsarten eine sichere und zuverlässige Kommutierung des Motors. Das Abschirmblech schützt die Bauteile vor magnetischen Störungen, so daß auch der thermische Einfluß auf die Sensorik keine Beeinträchtigung der Funktionssicherheit bewirkt.
Weiterhin wird der Wirkungsgrad des Motors in allen Betriebszuständen deutlich verbessert.

## Patentansprüche

1. Elektronisch kommutierter Außenläufermotor mit einem Außenrotor, der zu seiner Lagerung eine Welle (26) aufweist und bei dem in einem becherförmigen Trägerteil (11) ein radial magnetisierter Dauermagnet (12) angeordnet ist,
mit einem Innenstator (15), welcher ein Blechpaket (14) aufweist, das auf dem Lagerrohr (30) angeordnet ist und in dessen Nuten (34) Wicklungselemente (13) angeordnet sind, die über Wickelköpfe (16) an beiden Enden des Blechpakets (14) elektrisch miteinander verbunden sind,
wobei die Welle (26) in dem Lagerrohr (30) gelagert ist,
mit mindestens einem galvanomagnetischen Rotorstellungssensor (20, 21, 22), welcher der vom Boden des becherförmigen Trägerteils (11) abgewandten Stirnseite des Rotormagneten (12) etwa gegenüber liegend in einem Streuflussbereich des Rotormagneten (12) und auch in einem Streuflussbereich des Innenstators (15) angeordnet ist und dazu dient, Ströme in mindestens einem Teil der Wicklungselemente (13) zu steuern,
**gekennzeichnet durch** einen Flusskonzentrator (24) für den Streufluss des Innenstators (15), welcher Flusskonzentrator (24) auf dem Lagerrohr (30) und an den vom Boden des Trägerteils (11) abgewandten Wickelköpfen (16) auf deren vom Blechpaket (14) des Stators (15) abgewandten Seite mindestens in einem Winkelbereich des Innenstators (15) angeordnet ist, in welchem sich der mindestens eine Rotorstellungssensor (20, 21, 22) befindet.

2. Motor nach Anspruch 1, bei welchem der Flußkonzentrator (24) als ferromagnetisches Teil ausgebildet ist, welches sich etwa in Richtung der vom betreffenden Endbereich des Innenstators (15) ausgehenden Streufluß-Feldlinien erstreckt.

3. Motor nach Anspruch 1 oder 2, bei welchem der Flußkonzentrator (24) als im wesentlichen ringförmiges Teil aus ferromagnetischem Werkstoff ausgebildet ist.

4. Motor nach einem oder mehreren der vorhergehenden Ansprüche, bei welchem der Flußkonzentrator (24') an seinem Innenumfang zum Blechpaket (14) hin verlängert ist (Fig. 13).

5. Motor nach einem oder mehreren der vorhergehenden Ansprüche, bei welchem der Flußkonzentrator (24) mit radialen Ausnehmungen (33) versehen Ist, um Wirbelströme zu reduzieren.

6. Motor nach einem oder mehreren der vorhergehenden Ansprüche, bei welchem die beiden Ausgangssignale (84, 86) des galvanomagnetischen Rotorstellungssensors (20) mit je einem analogen Vorverstärker versehen sind.

7. Motor nach einem oder mehreren der vorhergehenden Ansprüche, bei dem die beiden Ausgangssignale (84, 86) des galvanomagnetischen Rotorstellungssensors (20) den beiden Eingängen (100, 106) eines Komparators (102) zugeführt werden.

8. Motor nach Anspruch 7, bei dem zwischen dem Ausgang (84) des galvanomagnetischen Rotorstellungssensors (20) und dem Eingang (100) des Komparators (102) ein Phasenschieberglied (96, 98) vorgesehen ist, um mit zunehmender Drehzahl die Kommutierung in Richtung nach früher zu verschieben.

9. Motor nach Anspruch 8, bei dem das Phasenschieberglied die Parallelschaltung eines Widerstands (96) und eines Kondensators (98) aufweist, und zwischen den Eingängen (100, 106) des Komparators (102) ein Widerstand (104) vorgesehen ist.

## Claims

1. Electronically commutated external rotor motor with an external rotor which comprises a shaft (26) for mounting thereof and in which a radially magnetised permanent magnet (12) is arranged in a cup-shaped carrier part (11), with an internal stator (15) which comprises a laminations pack (14) which is arranged on the bearing tube (30) and in the slots (34) of which are arranged winding elements (13) which are connected to one another electrically through winding heads (16) at both ends of the laminations packs (14), the shaft (26) being mounted in the bearing tube (30), with at least one galvanomagnetic rotor position sensor (20, 21, 22) which is arranged lying roughly opposite the end of the rotor magnet (12) remote from the bottom of the cup-shaped carrier part (11) in a stray flux area of the rotor magnet (12) and also in a stray flux area of the internal stator (15) and serves to control currents in at least one part of the winding elements (13), **characterised by** a flux concentrator (24) for the stray flux of the internal stator (15), which flux concentrator (24) is arranged on the bearing tube (30) and on the winding heads (16) remote from the bottom of the carrier part (11) on their side remote from the laminations pack (14) of the stator (15) at least in an angular area of the internal stator in which the at least one rotor position sensor (20, 21, 22) is located.

2. Motor according to claim 1, in which the flux concentrator (24) is embodied as a ferromagnetic part which extends roughly in the direction of the stray flux field lines emanating from the end area concerned of the internal stator (15).

3. Motor according to claim 1 or 2, in which the flux concentrator (24) is embodied as an essentially ring-shaped part made of ferromagnetic material.

4. Motor according to one or more of the preceding claims, in which the flux concentrator (24') is extended to the laminations pack (14) on its internal circumference (fig. 13).

5. Motor according to one or more of the preceding claims, in which the flux concentrator (24) is provided with radial recesses (33) in order to reduce eddy currents.

6. Motor according to one or more of the preceding claims, in which the two output signals (84, 86) of the galvanomagnetic rotor position sensor (20) are each provided with an analogue preamplifier.

7. Motor according to one or more of the preceding claims, in which the two output signals (84, 86) of the galvanomagnetic rotor position sensor (20) are fed to the two inputs (100, 106) of a comparator (102).

8. Motor according to claim 7, in which a phase shifting member (96, 98) is provided between the output (84) of the galvanomagnetic rotor position sensor (20) and the input (100) of the comparator (102) in order to advance the commutation as the rotational speed increases.

9. Motor according to claim 8, in which the phase shifting member comprises the parallel circuit of a resistor (96) and a capacitor (98), and in which a resistor (104) is provided between the inputs (100, 106) of the comparator (102).

## Revendications

1. Moteur à induit extérieur à commutation électronique avec un rotor extérieur qui présente un arbre (26) pour son montage et dans lequel un aimant permanent (12) à magnétisation radiale est disposé dans une pièce de support (11) en forme de coupe,
avec un stator intérieur (15) qui présente un empilage de tôles (14) qui est disposé sur le tube palier (30) et dans les encoches duquel sont disposés des éléments d'enroulement (13) qui sont reliés entre eux électriquement par des têtes de bobinage (16) aux deux extrémités de l'empilage de tôles (14),
l'arbre (26) étant logé dans le tube palier (30),
avec au moins un capteur de position de rotor (20, 21, 22) galvanomagnétique, lequel est disposé à peu près en face du côté frontal de l'aimant de rotor (12) éloigné du fond de la pièce de support (11) en forme de coupe dans une zone de flux de fuite de l'aimant de rotor (12) et aussi dans une zone de flux de fuite du stator intérieur (15) et qui sert à commander les courants dans au moins une partie des éléments d'enroulement (13),
**caractérisé par** un concentrateur de flux (24) pour le flux de fuite du stator intérieur (15), lequel concentrateur de flux (24) est disposé sur le tube palier (30) et au niveau des têtes de bobinage (16) éloignées du fond de la pièce de support (11) de leur côté éloigné de l'empilage de tôles (14) du stator (15) au moins dans un secteur angulaire du stator intérieur (15) dans lequel se trouve au moins un capteur de position de rotor (20, 21, 22).

2. Moteur selon la revendication 1, dans lequel le concentrateur de flux (24) est réalisé sous forme de pièce ferromagnétique qui s'étend à peu près en direction des lignes de flux de fuite émanant de la partie terminale concernée du stator intérieur (15).

3. Moteur selon la revendication 1 ou 2, dans lequel le concentrateur de flux (24) est réalisé sous forme de pièce essentiellement annulaire en matériau ferromagnétique.

4. Moteur selon l'une ou plusieurs des revendications précédentes, dans lequel le concentrateur de flux (24') est rallongé vers l'empilage de tôle (14) au niveau de sa circonférence intérieure (fig. 13).

5. Moteur selon l'une ou plusieurs des revendications précédentes, dans lequel le concentrateur de flux (24) est muni d'évidements radiaux (33) pour réduire les courants de Foucault.

6. Moteur selon l'une ou plusieurs des revendications précédentes, dans lequel les deux signaux de sortie (84, 86) du capteur de position de rotor (20) galvanomagnétique sont munis chacun d'un préamplificateur analogique.

7. Moteur selon l'une ou plusieurs des revendications précédentes, dans lequel les deux signaux de sortie (84, 86) du capteur de position de rotor (20) galvanomagnétique sont amenés aux deux entrées (100, 106) d'un comparateur (102).

8. Moteur selon la revendication 7, dans lequel il est prévu un circuit déphaseur (96, 98) entre la sortie (84) du capteur de position de rotor (20) galvanomagnétique et l'entrée (100) du comparateur (102) afin de décaler la commutation dans le sens de l'avance lorsque la vitesse de rotation augmente.

9. Moteur selon la revendication 8, dans lequel le circuit déphaseur présente le montage en parallèle d'une résistance (96) et d'un condensateur (98) et une résistance (104) est prévue entre les entrées (100, 106) du comparateur (102).
